# EUROPÄISCHE PATENTSCHRIFT

(11) **EP 0 603 127 B1**
(45) Veröffentlichungstag und Bekanntmachung des Hinweises auf die Patenterteilung: **05.03.1997**
(21) Anmeldenummer: 93810851.1
(22) Anmeldetag: 06.12.1993
(51) Int. Cl.: B26D 5/18

(54) **Stanzwerk zum Perforieren von flächenförmigen Objekten**
Punching machine for perforating plane objects
Machine à découper pour poinçonner des objets plans

(30) Priorität: 17.12.1992 CH 3861/92
(43) Veröffentlichungstag der Anmeldung: 22.06.1994
(73) Patentinhaber: DE LA RUE GIORI S.A., CH-1003 Lausanne (CH)
(72) Erfinder: Schaede, Johannes Georg, D-97074 Würzburg (DE); Dieterich, Philipp Andreas, D-97236 Randersacker (DE)
(74) Vertreter: Jörchel, Dietrich R.A.

(56) Entgegenhaltungen:
- DE-C- 411 999
- FR-A- 1 108 205
- GB-A- 2 045 154

## Beschreibung

Die Erfindung bezieht sich auf ein Stanzwerk zum Perforieren von flächenförmigen Objekten, insbesondere von Briefmarkenbögen, mit einer horizontalen Schnittplatte und einer dazu parallelen, vertikal bewegbaren Werkzeugplatte und mit einem Antriebsmechanismus, durch welchen die Werkzeugplatte oszillierend auf- und abverschiebbar ist.

Bei solchen Stanzwerken hat die Schnittplatte, auf welche die zu perforierenden Objekte gelegt werden, Löcher in der gewünschten Anordnung, und die Werkzeugplatte ist mit entsprechenden Perforierstiften versehen. Während des Betriebs des Stanzwerks werden grosse Massen rasch oszillierend bewegt, und es entstehen aufgrund der in den Umkehrpunkten der Bewegung auftretenden Beschleunigungen erhebliche Massenkräfte. Diese Massenkräfte können Funktionsprobleme des Stanzwerks selber und Schwingungs- und Standfestigkeitsprobleme am Aufstellungsort erzeugen.

Um diese Schwierigkeiten zu vermeiden, ist bereits durch die GB-A-2 045 154 ein Stanzwerk gemäss dem Oberbegriff des Anspruchs 1 bekannt geworden. In diesem Stanzwerk sind die Hebel, an deren einen horizontalen Hebelarmen die die bewegbare Werkzeugplatte tragenden Hubstangen angelenkt sind, als geradlinige Hebel ausgebildet, die in ihrer Mitte um ortsfeste Achsen drehbar sind. Die anderen beiden Hebelarme sind aufeinanderzugerichtet und an beiden Seiten des Gegengewichts angelenkt. An dem die Zugstange mit dem geradlinigen Hebel verbindenden Gelenkpunkt ist ferner ein im wesentlichen vertikal orientierter erster Hebelarm und an dessem anderen Ende ein zweiter, ebenfalls im wesentlichen vertikal orientierter Hebelarm angelenkt, dessen unteres Ende um eine horizontale ortsfeste Achse schwenkbar ist. Die zwischen beiden Hebelsystemen installierte Antriebsvorrichtung wirkt beiderseits jeweils auf die die beiden übereinanderliegenden Hebelarme verbindenden Gelenke, welche seitlich gegensinnig hin- und herbewegt werden, wobei die aus beiden übereinanderliegenden Hebelarmen bestehende gelenkige Verbindung zwischen der ortsfesten Lagerung des unteren Hebelarms und dem nicht ortsfesten Ende des oberen Hebelarms abwechselnd nach beiden Seiten etwas einknickt. Dadurch erfährt das Ende des oberen Hebelarms eine im wesentlichen vertikale Aufwärts- und Abwärtsbewegung. Dabei wird der höchste Punkt in derjenigen Stellung der beiden übereinanderliegenden Hebelarme erreicht, in welcher diese miteinander ausgerichtet sind.

Der Antriebsmechanismus besteht aus einem Doppelexzenter mit diametral gegenüberliegenden Exzenterzapfen, welche durch je einen Lenker jeweils mit dem Verbindungsgelenk der beiden übereinanderliegenden Hebelarmen verbunden sind. Während diese Verbindungsgelenke, ausgehend von ihrer dem Exzenter am nächsten liegenden Stellung, in ihre andere Endstellung ausgelenkt werden, also bei einer halben Umdrehung des Doppelexzenters, wird die Werkzeugplatte, ausgehend von ihrer unteren Stellung, angehoben und wieder abgesenkt, da beide abgewinkelten Endstellungen der beiden übereinanderliegenden Hebelarme derselben unteren Lage der Werkzeugplatte entsprechen.

Jedes Hebelsystem besteht bei diesem bekannten Stanzwerk, ausser aus der die Werkplatte tragenden Zugstange, aus drei gelenkig verbundenen Gliedern, nämlich dem geradlinigen, um die ortsfeste Achse drehbaren Hebel sowie den beiden gelenkig übereinander angeordneten Hebelarmen, wobei die oszillierende Antriebsbewegung der Lenker vermittels der beiden erwähnten Hebelarme in eine vertikale Hin- und Herbewegung umgewandelt wird.

Der Erfindung liegt die Aufgabe zugrunde, ein Stanzwerk mit einem alternativen Hebelsystem besonders vorteilhafter Bauart zu schaffen, wobei das Prinzip des aus der GB-A-2 045 154 bekannten Ausgleichs der Massenkräfte und Massenmomente beibehalten werden soll.

Diese Aufgabe wird erfindungsgemäss durch die im Anspruch 1 angegebenen Merkmale gelöst.

Auf diese Weise wird nicht nur erreicht, dass zu jeder sich bewegenden Masse eine sich symmetrisch bewegende Ausgleichsmasse vorhanden ist, so dass die Massenkräfte und Massenmomente sich in allen Hauptrichtungen des mechanischen Systems kompensieren, sondern es wird ein Hebelsystem geschaffen, welches, ausser der die Werkplatte an jeder Seite tragenden Zugstange, nur zwei Winkelhebel aufweist, von denen jeder um eine ortsfeste Achse drehbar gelagert ist, so dass die vom Antriebsmechanismus auf die Winkelhebel ausgeübte oszillierende Antriebsbewegung direkt, ohne ein weiteres Gelenkteil, einerseits auf die Zugstange und andererseits auf das Gegengewicht übertragen wird.

Die Erfindung wird anhand der Zeichnungen an einem Ausführungsbeispiel näher erläutert. Es zeigen:
Figur 1 eine schematische Seitenansicht eines Stanzwerks nach der Erfindung in einer Zwischenstellung,
Figur 1a das Stanzwerk nach Figur 1 mit seiner Werkzeugplatte in ihrer oberen und
Figur 1b in ihrer unteren Stellung,
Figur 2 eine schematische Ansicht in Richtung des Pfeils II nach Figur 1,
Figur 3 den das Schubgelenk einschliessenden Teil des Stanzwerks in vergrössertem Masstab, wobei das Gegengewicht und der dieses Gegengewicht tragende Hebelarm um 90° nach oben verschwenkt dargestellt sind, und
Figur 4 eine Teilansicht in Richtung des Pfeils IV nach Figur 3.

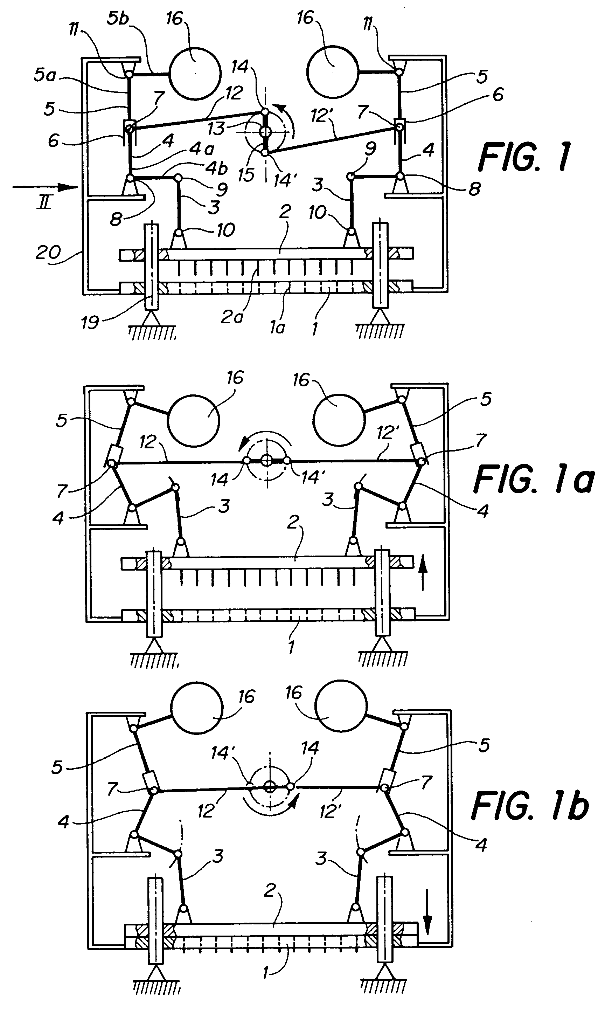

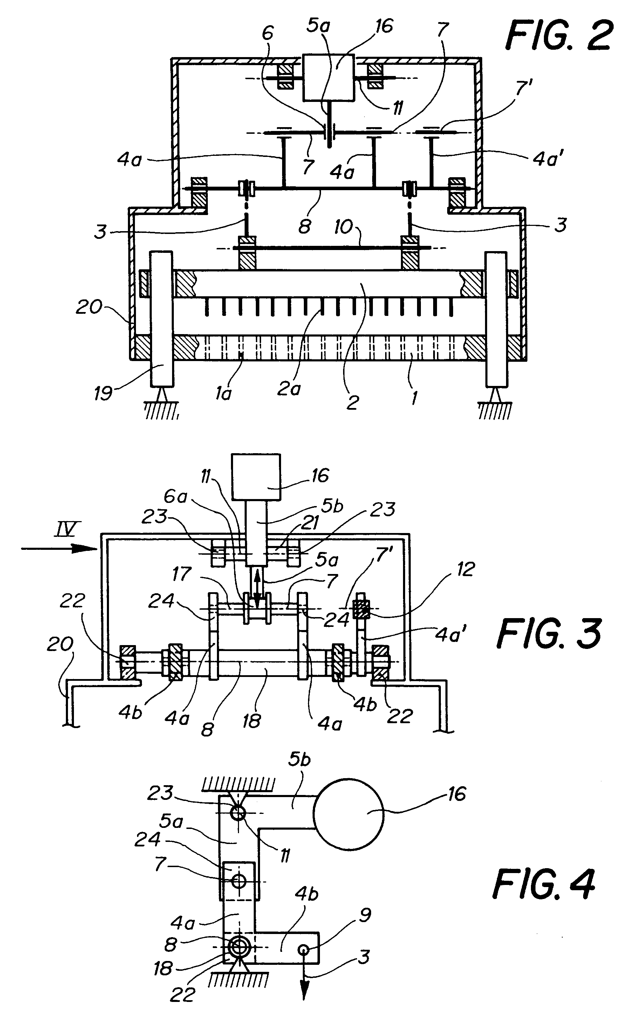

Wie in den Figuren 1 und 2 dargestellt, ist im unteren Bereich eines Maschinengestells 20 eine feste horizontale Schnittplatte 1 mit Löchern 1a montiert und darüber eine mit Perforierungsstiften 2a versehene Werkzeugplatte 2, die parallel zur Schnittplatte 1 orientiert ist, mittels vertikaler Führungssäulen 19 vertikal auf- und abbewegbar gelagert. Die zu perforierenden flächenförmigen Objekte, insbesondere Briefmarkenbögen, werden auf die Oberseite der Schnittplatte 1 gelegt und bei der Abwärtsbewegung der Werkzeugplatte 2 durch die mit den Löchern 1a ausgerichteten Stifte 2a, die in diese Löcher 1a eingreifen, perforiert.

Die Werkzeugplatte 2 ist an gegenüberliegenden Seiten mit Hilfe von Hubstangen 3 an je einem Hebelsystem aufgehängt, das nach Figur 1 auf beiden Seiten gleich aufgebaut ist und im wesentlichen aus übereinander angeordneten Winkelhebeln 4 und 5 besteht. Im betrachteten Beispiel sind an jeder Seite zwei Hubstangen 3, zwei untere Winkelhebel 4 mit den Hebelarmen 4a, 4b und ein oberer Winkelhebel 5 mit den Hebelarmen 5a, 5b vorgesehen (Figur 2 und 3). Die unteren Winkelhebel 4 sind an ihrer Winkelecke um eine horizontale ortsfeste Achse 8 drehbar im Gestell 20 gelagert; ihre Hebelarme 4a und 4b sind im betrachteten Beispiel rechtwinklig zueinander angeordnet, und in der in Figur 1 gezeigten Zwischenstellung des Stanzwerks ist der Hebelarm 4a im wesentlichen vertikal und der Hebelarm 4b im wesentlichen horizontal orientiert, wobei die Hebelarme 4a nach oben weisen.

Die Hubstangen 3 mit ihren oberen Enden an den Enden der betreffenden Hebelarme 4b bei 9 gelenkig befestigt und mit ihren unteren Enden an der Oberseite der Werkzeugplatte 2 um eine gemeinsame horizontale Achse 10 schwenkbar angelenkt.

Der obere Winkelhebel 5 ist an seiner Winkelecke um eine horizontale ortsfeste Achse 11, die vertikal über der Achse 8 und parallel zu dieser liegt, im Gestell 20 drehbar gelagert und hat die beiden Hebelarme 5a und 5b, die ebenfalls wenigstens näherungsweise rechtwinklig zueinander orientiert sind. In der in Figur 1 gezeigten Zwischenstellung des Stanzwerks ist der Hebelarm 5a im wesentlichen vertikal und der andere Hebelarm 5b im wesentlichen horizontal ausgerichtet, wobei der Hebelarm 5a nach unten weist.

Die Enden der Hebelarme 4a sind mit dem Ende des Hebelarms 5a durch ein Schubgelenk 6, das die freie Achse 7 hat, gelenkig miteinander verbunden. Das Schubgelenk, das anhand der Figuren 2 bis 4 noch näher erläutert wird, ist erforderlich, weil die Winkelhebel 4 und 5 zwischen den in den Figuren 1a und 1b gezeigten Extremstellungen um ihre Achsen 8 bzw. 11 hin- und herschwingen müssen.

Zum gemeinsamen Antrieb der Winkelhebel auf jeder Seite des Maschinengestells dient ein in der Mitte zwischen beiden Hebelsystemen montierter Doppelexzenter 15, der um eine ortsfeste Achse 13 in Drehung versetzt wird und zwei diametral gegenüberliegende Exzenterzapfen 14 und 14' hat. An einen Exzenterzapfen 14 ist ein Lenker 12 angelenkt, dessen anderes Ende gelenkig mit dem Schubgelenk 6 auf der einen Seite des Gestells verbunden ist; am anderen Exzenterzapfen 14' ist ein Lenker 12' angelenkt, der mit dem Schubgelenk 6 auf der anderen Seite gelenkig verbunden ist.

An den Enden der Hebelarme 5b sind Gegengewichte 16 befestigt, welche als Ausgleichsmassen so bemessen sind, dass ihr Gewicht näherungsweise dem Gewicht der Werkzeugplatte 2 und der zu ihrer Aufhängung dienenden Elemente, insbesondere der Hubstange 3, entspricht.

Wenn der Doppelexzenter 15 durch einen Antrieb im Sinne des Pfeils nach Figur 1 in stetige Drehung versetzt wird, dann werden, ausgehend von der Zwischenstellung nach Figur 1, die Schubgelenke 6 auf beiden Seiten symmetrisch voneinander entfernt, wodurch auf der linken Seite nach Figur 1 die Winkelhebel 4 entgegengesetzt zum Uhrzeigersinne und der Winkelhebel 5 im Uhrzeigersinne verschwenkt werden, während auf der rechten Seite gegensinnig dazu die Winkelhebel 4 im Uhrzeigersinne und der Winkelhebel 5 entgegengesetzt dazu verschwenkt werden. Durch diese Verschwenkungen wird die Werkzeugplatte 2 in ihre obere Stellung angehoben, und gleichzeitig werden die Gegengewichte 16 abgesenkt; diese eine Endstellung ist in Figur 1a gezeigt.

Während der folgenden halben Umdrehung des Doppelexzenters 15 werden alle Winkelhebel im jeweils entgegengesetzten Sinne verschwenkt. Dadurch wird die Werkzeugplatte 2 bis zur Anlage an der Schnittplatte 1 abgesenkt, wobei die Stifte 2a in die Löcher 1a eingreifen, und gleichzeitig werden die Gegengewichte 16 angehoben; diese andere Endlage des Stanzwerks ist in Figur 1b dargestellt.

Durch den angetriebenen Doppelexzenter 15 und die beiden Hebelsysteme wird also die Werkzeugplatte 2 in eine harmonische Hubbewegung versetzt. Aufgrund der Anordnung und der gegenläufigen Bewegung aller Teile werden die bei der Beschleunigung auftretenden Massenkräfte sowohl in horizontaler als auch in vertikaler Richtung kompensiert. Einerseits führen die beiden Lenker 12 und 12' sowie die Hebelarme 4a und 5a der Winkelhebel auf beiden Seiten im horizontalen Sinne gegenläufige Bewegungen aus, und andererseits wird die Werkzeugplatte 2 mit den Hubstangen 3 und den Hebelarmen 4b im vertikalen Sinne stets gegenläufig zu den Gegengewichten 16 und den Hebelarmen 5b bewegt.

Die Figuren 2, 3 und 4 zeigen das Beispiel einer praktischen Ausbildung des Schubgelenks 6 sowie der Verbindung desselben mit dem Lenker 12. Aus Gründen der Anschaulichkeit sind in Figur 3 der dort erscheinende Hebelarm 5b und das an dessen Ende befestigte Gegengewicht 16 um 90° nach oben versetzt dargestellt. Die Achse 8 nach Figur 1 und 2 ist die Achse einer Winkelhebelwelle 18, deren Enden in Lagern 22 des Maschinengestells 20 gelagert sind. An dieser Winkelhebelwelle 18 sind die beiden Winkelhebel 4 mit ihren Hebelarmen 4a und 4b (Figur 3 und 4) sowie seitlich daneben und parallel zu den Hebelarmen 4a ein weiterer vertikaler Hebelarm 4a' starr befestigt. Die die Hubstangen 3 tragenden Winkelhabel 4b sind, wie die Figuren 2 und 3 zeigen, gegenüber den Hebelarmen 4a nach aussen versetzt an der Welle 8 befestigt.

Die Enden der Hebelarme 4a tragen Lager 24 zur Aufnahme der Welle 17, deren Achse 7 die bewegliche freie Achse des Schubgelenks 6 ist. Dieses Schubgelenk 6 weist einen an der Welle 17 montierten Schiebeteil 6a auf, der am Hebelarm 5a des Winkelhebels 5 im Sinne des Doppelpfeils nach Figur 3 längsverschiebbar gelagert ist. Der Winkelhebel 5 mit seinem Hebelarm 5a und dem in Figur 3 um 90° versetzt gezeichneten Hebelarm 5b, der das Gegengewicht 16 trägt, ist starr an der die Achse 11 aufweisenden Welle 21 befestigt, die in Lagern 23 des Gestells 20 gelagert ist.

Der Hebelarm 4a' dient zur gelenkigen Befestigung des Lenkers 12, der am Ende dieses Hebelarms um die Achse 7', welche in Verlängerung der Achse 7 liegt und daher zur freien Achse des Schubgelenks gehört, drehbar ist. In gleicher Weise ist der andere Lenker 12' auf der anderen Seite montiert.

Der von den Hebelarmen 4a getrennt angebrachte Hebelarm 4a' zur gelenkigen Befestigung des Lenkers 12 bzw. 12' ist aus konstruktiven Gründen zweckmässig. Es ist jedoch auch möglich, den Lenker 12 bzw. 12' auf andere Weise gelenkig mit dem Schubgelenk 6 oder, was praktisch das gleiche ist, mit einem der vertikalen Hebelarme 4a oder 5a zu verbinden, zum Beispiel direkt an der Welle 17 oder direkt an einem der Hebelarme 4a oder 5a anzulenken.

Bei einer abgewandelten Ausführungsform kann auf das Schubgelenk 6 verzichtet werden, indem auf jedem Exzenterzapfen 14 und 14' zwei Lenker angebracht werden, von denen an jeder Seite des Stanzwerks der eine am Hebelarm 5a und der andere an einem der Hebelarme 4a oder an einem besonderen Hebelarm ähnliche dem Hebelarm 4a' angelenkt ist, wobei beide Winkelhebel 4 und, wenn vorhanden, der besondere Hebelarm starr miteinander verbunden sind, zum Beispiel durch eine Winkelhebelwelle ähnlich der Welle 18. Bei dieser Ausführungsform liegen vorzugsweise in jedem Hebelsystem die Gelenkverbindungen der beiden Lenker mit dem oberen Winkelhebel und mit den unteren Winkelhebeln wenigstens näherungsweise in einer gemeinsamen vertikalen Ebene.

Die Erfindung ist nicht auf die beschriebenen Ausführungsbeispiele beschränkt, sondern lässt hinsichtlich der konstruktiven Ausgestaltung aller Teile und der Anzahl der Winkelhebel und Hubstangen auf jeder Seite des Stanzwerks mannigfache Varianten zu. So braucht im Prinzip jedes Hebelsystem nur einen unteren Winkelhebel zu haben, dessen horizontaler Hebelarm zum Beispiel eine Traverse trägt, an der die Zugstangen hängen. Auch können mehr als zwei untere Winkelhebel und eventuell mehrere obere Winkelhebel vorgesehen sein.

## Patentansprüche

1. Stanzwerk zum Perforieren von flächenförmigen Objekten mit einer horizontalen Schnittplatte (1) und einer dazu parallelen, vertikal bewegbaren Werkzeugplatte (2), mit einem Antriebsmechanismus (15), durch welchen die Werkzeugplatte (2) oszillierend auf- und abverschiebbar ist, wobei die Werkzeugplatte (2) an gegenüberliegenden Seiten mit Hilfe von angelenkten Hubstangen (3) an je einem Hebelsystem aufgehängt ist, welches ein Gegengewicht (16) trägt und welches wenigstens einen um eine ortsfeste horizontale Achse (8) drehbar gelagerten Hebel (4) aufweist, wobei die Hubstangen (3) an den einen, im wesentlichen horizontal orientierten Hebelarmen (4b) dieser Hebel (4) angelenkt sind und wobei die Antriebsvorrichtung (15) dazu eingerichtet ist, alle Hebel (4) gleichzeitig hin- und herzuschwenken und dabei den Hebel (4) auf der einen Seite jeweils gegensinnig zum Hebel auf der anderen Seite zu bewegen, derart, dass das Gegengewicht (16) gegensinnig zur vertikalen Bewegung der Werkzeugplatte (2) antreibbar ist, dadurch gekennzeichnet, dass
a) der Hebel als unterer Winkelhebel (4) angeordnet ist und jedes Hebelsystem wenigstens einen darüber angeordneten oberen Winkelhebel (5) aufweist, der in seinem Winkelbereich ebenfalls um eine ortsfeste horizontale Achse (11) drehbar gelagert ist;
b) jeder Winkelhebel (4, 5) einen im wesentlichen vertikal gerichteten Hebelarm (4a, 5a) und einen im wesentlichen horizontal gerichteten Hebelarm (4b, 5b) hat, wobei der vertikale Hebelarm (4a) des unteren Winkelhebels (4) nach oben und der vertikale Hebelarm (5a) des oberen Winkelhebels (5) nach unten weist;
c) das Gegengewicht (16) am horizontalen Hebelarm (5b) des jeweils oberen Winkelhebels (5) jedes Hebelsystems angeordnet ist und
d) die Antriebsvorrichtung (15) dazu eingerichtet ist, die übereinanderliegenden Winkelhebel (4, 5) jedes Hebelsystems jeweils in entgegengesetzten Richtungen zueinander um ihre ortsfesten Achsen (8, 11) zu drehen.

2. Stanzwerk nach Anspruch 1, dadurch gekennzeichnet, dass die Antriebsvorrichtung einen zwischen beiden Hebelsystemen installierten Doppelexzenter (15) aufweist, der um eine ortsfeste Achse (13) in Drehung versetzbar ist und an diametral gegenüberliegenden Seiten Exzenterzapfen (14, 14') hat, von denen der eine (14) bzw. der andere Exzenterzapfen (14') durch Lenker mit den vertikalen Hebelarmen (4a, 5a) der übereinander angeordneten Winkelhebel des einen bzw. des anderen Hebelsystems verbunden ist.

3. Stanzwerk nach Anspruch 2, dadurch gekennzeichnet, dass die Enden der vertikalen Hebelarme (4a, 5a) der übereinanderliegenden Winkelhebel durch ein Schubgelenk (6) drehbar miteinander verbunden sind und dass die Verbindung zwischen einem Exzenterzapfen (14, 14') und dem betreffenden Hebelsystem aus einem Lenker (12, 12') besteht, der gelenkig mit dem Schubgelenk (6) verbunden ist, so dass bei Drehung des Doppelexzenters (15) die Schubgelenke (6) der beiden Hebelsysteme in wenigstens näherungsweise horizontaler Richtung gegensinnig hin- und herbewegt werden.

4. Stanzwerk nach einem der Ansprüche 1 bis 3, dadurch gekennzeichnet, dass jedes Hebelsystem mehrere untere Winkelhebel (4) und wenigstens einen oberen Winkelhebel (5) aufweist und dass die unteren Winkelhebel (4) im Abstand nebeneinander starr an einer ortsfest gelagerten Winkelhebelwelle (18) befestigt sind.

5. Stanzwerk nach Anspruch 4, dadurch gekennzeichnet, dass jedes Hebelsystem zwei untere Winkelhebel (4) und einen oberen Winkelhebel (5) aufweist.

6. Stanzwerk nach Anspruch 3 und 5, dadurch gekennzeichnet, dass zwischen den Enden der vertikalen Hebelarme (4a) der unteren Winkelhebel (4) eine Welle (17) drehbar gelagert ist, welche die Welle des Schubgelenks (6) bildet, und dass der vertikale Hebel(5a) des oberen Winkelhebels (5) mit dieser Welle (17) gelenkig verbunden und im Schubgelenk verschiebbar ist.

7. Stanzwerk nach einem der Ansprüche 4 bis 6, dadurch gekennzeichnet, dass an der erwähnten Winkelhebelwelle (18) ein weiterer Hebelarm (4a') parallel zu den vertikalen Hebelarmen (4a) der Winkelhebel (4) starr befestigt und mit seinem Ende an dem Lenker (12, 12') angelenkt ist.

8. Stanzwerk nach Anspruch 2, dadurch gekennzeichnet, dass jeder Exzenterzapfen mittels zweier Lenker einerseits mit dem vertikalen Hebelarm des unteren Winkelhebels und andererseits mit dem vertikalen Hebelarm des oberen Winkelhebels verbunden ist.

## Claims

1. A punching unit for the perforation of sheet-like articles with a horizontal cutting plate (1) and a vertically movable tool plate (2) parallel thereto, and with a drive mechanism (15), by means of which the tool plate (2) is displaceable upwards and downwards in oscillation, wherein the tool plate (2) is suspended on each of mutually opposite sides by means of articulated lifting rods (3) from a lever system which carries a counterweight (16) and which has at least one angle lever (4), mounted so as to be rotatable about a fixed horizontal axis (8), the lifting rods (3) being articulated on the one, essentially horizontally directed lever arm (4b) of each of said levers (4) and the drive device (15) being designed for pivoting all the levers (4) to and fro simultaneously and in doing so for moving the lever (4) on one side respectively in the opposite direction to the corresponding lever on the other side, in such a way that the counterweights (16) can be driven in the opposite direction to the vertical movement of the tool plate (2), characterised in that
a) said lever is arranged as a lower angle lever (4) and each lever system comprises at least one upper angle lever (5) arranged above said lower angle lever and mounted in its angle region so as to be also rotatable about a fixed horizontal axis (11);
b) each angle lever (4, 5) has an essentially vertically directed lever arm (4a, 5a) and an essentially horizontally directed lever arm (4b, 5b), the vertical lever arm (4a) of the lower angle lever (4) pointing upwards and the vertical lever arm (5a) of the upper angle lever (5) pointing downwards;
c) the counterweight (16) is installed on the horizontal lever arm (5b) of the respective upper angle lever (5) of each lever system, and
d) the drive device (15) is designed for pivoting the angle levers (4, 5) of each lever system which are located one above the other respectively in opposite directions to one another around their fixed axes (8, 11).

2. The punching unit as claimed in claim 1, wherein the drive device has a double eccentric (15) which is installed between the two lever systems and which can be set in rotation about a fixed axis (13) and has on diametrically opposite sides eccentric pins (14, 14'), of which one eccentric pin (14) and the other, respectively, (14') is connected by means of links to the vertical lever arms (4a, 5a) of the angle levers arranged one above the other and belonging to one lever system and the other, respectively.

3. The punching unit as claimed in claim 2, wherein the ends of the vertical lever arms (4a, 5a) of the angle levers located one above the other are connected to one another rotatably by means of a sliding joint (6), and wherein the connection between an eccentric pin (14, 14') and the respective lever system consists of a link (12, 12') which is connected in an articulated manner to the sliding joint (6), so that, during the rotation of the double eccentric (15), the sliding joints (6) of the two lever systems are moved to and fro in opposition in an at least approximately horizontal direction.

4. The punching unit as claimed in one of claims 1 to 3, wherein each lever system has a plurality of lower angle levers (4) and at least one upper angle lever (5), and wherein the lower angle levers (4) are rigidly fastened at a distance next to one another to a fixedly mounted angle-lever shaft (18).

5. The punching unit as claimed in claim 4, wherein each lever system has two lower angle levers (4) and one upper angle lever (5).

6. The punching unit as claimed in claims 3 and 5, wherein a shaft (17) forming the shaft of the sliding joint (6) is mounted rotatably between the ends of the vertical lever arms (4a) of the lower angle levers (4), and wherein the vertical lever arm (5a) of the upper angle lever (5) is connected to this shaft (17) in an articulated manner and is displaceable in the sliding joint.

7. The punching unit as claimed in one of claims 4 to 6, wherein a further lever arm (4a') is rigidly fastened, parallel to the vertical lever arms (4a) of the angle lever (4), to said angle-lever shaft (18) and is articulated at its end on the link (12, 12').

8. The punching unit as claimed in claim 2, wherein each eccentric pin is connected by means of two links on the one hand to the vertical lever arm of the lower angle lever and on the other hand to the vertical lever arm of the upper angle lever.

## Revendications

1. Unité d'étampage pour la perforation d'objets plats comprenant une plaque de coupe horizontale (1) et une plaque-outil (2) parallèle à la plaque de coupe et mobile verticalement, un mécanisme d'entraînement (15) par lequel la plaque-outil (2) est déplaçable verticalement de manière oscillante, dans laquelle la plaque-outil (2) est suspendue par ses côtés opposés à l'aide de bielles (3) articulées chacune à un système de levier portant un contrepoids (16) et présentant au moins un levier (4) monté rotativement autour d'un axe fixe horizontal (8), les bielles (3) étant articulées à l'un des bras (4b) dirigé sensiblement horizontalement de ces leviers (4) et dans laquelle le dispositif d'entraînement (15) est agencé de telle sorte que tous les leviers (4) oscillent simultanément et entraînent ainsi le levier (4) de l'un des côtés en sens opposé à celui du levier situé de l'autre côté, de telle sorte que le contrepoids (16) est entraînable dans le sens opposé au déplacement vertical de la plaque-outil (2), caractérisée en ce que :
a) le levier est agencé en levier inférieur coudé (4) et chaque système de levier comprend au moins un levier coudé supérieur (5) disposé au dessus et qui est monté rotativement dans la région de son coude également autour d'un axe fixe horizontal (11) ;
b) chaque levier coudé (4, 5) présente un bras de levier dirigé sensiblement verticalement (4a, 5a) et un bras de levier (4b, 5b) dirigé sensiblement horizontalement, le bras de levier vertical (4a) du levier coudé inférieur (4) étant dirigé vers le haut et le bras de levier vertical (5a) du levier coudé supérieur (5) étant dirigé vers le bas ;
c) le contrepoids (16) est disposé sur le bras de levier horizontal (5b) de chacun des leviers coudés supérieur (5) de chacun des systèmes de leviers et ;
d) le dispositif d'entraînement (15) est agencé de manière à entraîner en rotation les leviers coudés superposés (4, 5) de chaque système de leviers dans des sens opposés autour de leurs axes fixes (8, 11).

2. Unité d'étampage selon la revendication 1, caractérisée en ce que le dispositif d'entraînement comprend, entre les deux systèmes de leviers, un double excentrique (15) entraînable en rotation autour d'un axe fixe (13) et muni de deux manetons (14, 14') diamétralement opposés qui sont respectivement reliés par des bielles aux bras de levier verticaux (4a, 5a) des leviers coudés superposés de chacun des systèmes de leviers.

3. Unité d'étampage selon la revendication 2, caractérisée en ce que les extrémités des bras de levier verticaux (4a, 5a) des leviers coudés superposés sont reliés rotativement au moyen d'une articulation à glissière (6) et que la liaison entre un maneton d'excentrique (14, 14') et le système de leviers correspondant est constituée d'une bielle (12, 12') articulée sur l'articulation à glissière (6), de telle sorte que lors de la rotation du double excentrique (15) les articulations à glissière(6) des deux systèmes de leviers sont entraînées dans des sens opposés dans une direction au moins approximativement horizontale.

4. Unité d'étampage selon l'une des revendications 1 à 3, caractérisée en ce que chaque système de leviers comprend plusieurs leviers coudés inférieurs (4) et au moins un levier coudé supérieur (5) et ce que les leviers coudés inférieurs (4) sont fixés rigidement l'un à côté de l'autre, à une certaine distance l'un de l'autre, à un axe fixe (18).

5. Unité d'étampage selon la revendication 4, caractérisée en ce que chacun des systèmes de leviers comprend deux leviers coudés inférieurs (4) et un levier coudé supérieur (5).

6. Unité d'étampage selon les revendications 3 et 5, caractérisée en ce qu'un arbre (17) est monté rotativement entre les extrémités des bras de levier verticaux (4a) des leviers coudés inférieurs (4), cet arbre constituant l'arbre de l'articulation à glissière (6), et en ce que le bras de levier vertical (5a) du levier coudé supérieur (5) est articulé sur cet arbre (17) et déplaçable dans l'articulation à glissière.

7. Unité d'étampage selon l'une des revendications 4 à 6, caractérisée en ce qu'un autre bras de levier (4a') parallèle aux bras de levier verticaux (4a) des leviers coudés (4) est fixé rigidement à l'arbre (18) des leviers coudés et qu'il est articulé par l'une de ses extrémités à la bielle d'excentrique (12, 12').

8. Unité d'étampage selon la revendication 2, caractérisée en ce que chacun des manetons d'excentrique est relié par deux bielles, d'une part, au bras de levier vertical du levier coudé inférieur et, d'autre part, au bras de levier vertical du levier coudé supérieur.
